(19) Europäisches Patentamt
European Patent Office
Office européen des brevets

(11) **EP 3 227 947 B1**

(12) **EUROPÄISCHE PATENTSCHRIFT**

(45) Veröffentlichungstag und Bekanntmachung des Hinweises auf die Patenterteilung:
**26.09.2018 Patentblatt 2018/39**

(21) Anmeldenummer: **15790876.5**

(22) Anmeldetag: **29.10.2015**

(51) Int Cl.:
*H01M 8/0662* (2016.01)     *H01M 8/1231* (2016.01)
*H01M 4/90* (2006.01)

(86) Internationale Anmeldenummer:
**PCT/EP2015/075058**

(87) Internationale Veröffentlichungsnummer:
**WO 2016/087131 (09.06.2016 Gazette 2016/23)**

(54) **REGENERATION VON FESTOXIDBRENNSTOFFZELLEN**

REGENERATION OF SOLID OXIDE FUEL CELLS

RÉGÉNÉRATION DE CELLULES ÉLECTROCHIMIQUES À OXYDE SOLIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.12.2014 DE 102014017724**

(43) Veröffentlichungstag der Anmeldung:
**11.10.2017 Patentblatt 2017/41**

(73) Patentinhaber:
• **thyssenkrupp AG**
**45143 Essen (DE)**
• **ThyssenKrupp Marine Systems GmbH**
**24143 Kiel (DE)**

(72) Erfinder: **NEHTER, Pedro**
**24226 Heikendorf (DE)**

(74) Vertreter: **thyssenkrupp Intellectual Property GmbH**
**ThyssenKrupp Allee 1**
**45143 Essen (DE)**

(56) Entgegenhaltungen:
**WO-A1-2015/014415     JP-A- 2005 353 348**
**US-A1- 2011 189 582**

• **SETHURAMAN V A ET AL: "Analysis of sulfur poisoning on a PEM fuel cell electrode", ELECTROCHIMICA ACTA, ELSEVIER SCIENCE PUBLISHERS, BARKING, GB, Bd. 55, Nr. 20, 1. August 2010 (2010-08-01), Seiten 5683-5694, XP027114543, ISSN: 0013-4686 [gefunden am 2010-05-12]**

**Beschreibung**

Die Erfindung betrifft ein Verfahren zum Betrieb einer Festoxidbrennstoffzelle (solid oxygen fuel cell, SOFC). Festoxidbrennstoffzellen zeichnen sich dadurch aus, dass als Elektrolyt zwischen Anode und Kathode ein Sauerstoffionen leitendes Oxid eingesetzt wird. Um den Ionentransport zu ermöglichen werden Festoxidbrennstoffzellen bei erhöhter Temperatur oberhalb von 500 °C, meist oberhalb von 650 °C, oft oberhalb von 800 °C betrieben. Die derzeit üblicherweise eingesetzten Temperaturen liegen im Bereich von 850 °C bis 950 °C.

Als Brennstoff für Brennstoffzellen eignet sich insbesondere Wasserstoff. Wasserstoff kann entweder als tiefkalter Wasserstoff in flüssiger Form oder unter hohem Druck mitgeführt werden. Hierbei ist das Problem, dass der bei einem Leck austretende Wasserstoff jedoch mit der Luft ein explosives Gemisch bildet. Alternativ kann Wasserstoff in Form von Metallhydrid gespeichert werden. Nachteil dieser Form ist das extrem hohe Gewicht der Tanks und die im Vergleich dazu geringe Treibstoffmenge. Des Weiteren besteht derzeit keine ausgebaute Infrastruktur zur Versorgung mit Wasserstoff.

Festoxidbrennstoffzellen weisen eine hohe Effizienz auf und können mit einer Vielzahl an Energieträgern betrieben werden. Insbesondere ist der Betrieb mit klassischen Kohlenwasserstoffen, zum Beispiel aufbereitetem Diesel, möglich, da die Brennstoffzelle gegen Kohlenstoffmonoxid unempfindlich ist. Durch die Verwendung klassischer Treibstoffe kann auf die bereits bestehende Infrastruktur zurückgegriffen werden. Vorteilhafter Weise können auch konventionelle Systeme (Verbrennungssysteme) parallel und/oder zeitversetzt zur Festoxidbrennstoffzelle mit dem gleichen Energieträger betrieben werden.

Daher ist es vorteilhaft das Brenngas für die Brennstoffzelle durch einen Reformer bedarfsabhängig aus einem handelsüblichen Treibstoff, zum Beispiel Diesel zu gewinnen. Beim Reformieren wird der Kohlenwasserstoff mit Wasserdampf an einem Katalysator zu Kohlenmonoxid (CO) und Wasserstoff ($H_2$) umgesetzt. Das entstehende Gasgemisch wird Synthesegas genannt. Das Synthesegas enthält insbesondere Wasserstoff, Kohlenmonoxid, Kohlendioxid und Wasser. Vorteilhafter Weise wird dieser endotherme Prozess mit der Abwärme der bei hoher Temperatur betriebenen Festoxidbrennstoffzelle betrieben.

Als Problem hat sich jedoch erwiesen, dass selbst schwefelarmer und auch sogenannter schwefelfreier Diesel Schwefel enthält, welcher zu einer Deaktivierung der katalytisch aktiven Zentren der Brennstoffzelle führt. Diesel gilt nach 10. BlmSchV § 13 in Verbindung mit DIN EN 590 als schwefelfrei, sofern der Schwefelgehalt maximal 10 ppm beträgt.

Aus der US 2014/0170517 A1 ist ein Verfahren zur Regeneration einer Brennstoffzelle mit einer Protonenaustauschmembran bekannt. Im Gegensatz zur Festoxidbrennstoffzelle werden nur Protonen (Wasserstoffionen) durch den Elektrolyten geleitet, welche eine wesentlich höhere Beweglichkeit aufweisen. Durch diesen sehr unterschiedlichen Mechanismus müssen diese Brennstoffzellen nicht bei hohen Temperaturen betrieben werden.

Aus der DE 11 205 002 675 T5 ist ein Regenerierungsverfahren für eine Brennstoffzelle bekannt, bei welchem über die Flussrate des oxidierenden Gases die Zellspannung variiert und so eine Entfernung der abgelagerten Verunreinigungen bewirkt. Bei den Verunreinigungen handelt es sich um Platinhydroxid auf einem Platinkatalysator.

In der DE 10 2012 103 189 A1 wird das Problem diskutiert, dass Brenngas für eine Hochtemperaturbrennstoffzelle durch einen Reformer aus Diesel erzeugt wird, mit Schwefel versetzt ist und Schwefel den katalytischen Prozess durch Vergiften des Katalysators fortschreitend unterbindet. Zur Lösung dieses Problems schlägt die DE 10 2012 103 189 A1 vor, das Brenngas durch die Wassergas-Shift-Reaktion umzusetzen und einen höheren Anteil an $H_2$ am Brennganz zu erreichen, da die Vergiftung scheinbar nur die Umsetzung des im Brenngas enthaltenen CO verhindert. Dieses erfordert eine kontinuierliche hohe Zufuhr an Wasser.

Die DE 10 2012 221461 A1 schlägt die Entfernung des Schwefels aus dem Anodengas mit Hilfe einer Entschwefelungsvorrichtung vor.

Aus der WO 2015 / 014 415 A1 ist eine Methode zur Regeneration einer schwefelverfgitetet Brennstoffzelle, insbesondere einer Festoxidbrennstoffzelle, bekannt.

Aus der US 2011/189 582 A1 ist eine Methode zur Herstellung einer symmetrischen Festoxidbrennstoffzelle bekannt.

Aufgabe der Erfindung ist es, ein einfaches Verfahren zum Regenerieren einer Festoxidbrennstoffzelle bereit zu stellen, um ohne die Verwendung zusätzlicher und wartungsaufwändiger Bauteile auch die Verwendung schwefelhaltiger Brenngase zu ermöglichen, ohne dass die Wirksamkeit des Katalysators dadurch herabgesetzt wird.

Schwefelhaltig ist im Sinne dieser Erfindung jeder Treibstoff oder jedes Brenngas, welches Schwefel in beliebiger Menge enthält. Somit sind auch Treibstoffe, welche nur Schwefel im ppb Bereich enthalten und somit gesetzlich als schwefelfrei bezeichnet werden dürfen, als schwefelhaltig einzuordnen.

Gelöst wird die Aufgabe durch das Verfahren mit den in Anspruch 1 angegebenen Merkmalen. Vorteilhafte Weiterbildungen ergeben sich aus den Unteransprüchen, der nachfolgenden Beschreibung sowie den Zeichnungen.

Das erfindungsgemäße Verfahren zur Regeneration einer Festoxidbrennstoffzelle umfasst die folgenden Schritte.

a) Die Betriebstemperatur der Festoxidbrennstoffzelle wird auf eine Temperatur zwischen 600 °C und 1.200 °C eingestellt. Die Festoxidbrennstoffzelle wird mit Synthesegas aus einer Dampfreformierung als Anodengas betrieben, wobei

b) der molare Wasserstoffanteil des Synthesegases auf mindestens 1 % und höchstens 10 % eingestellt wird. Vorteilhafter Weise wird die Zusammensetzung über die Prozessparameter der Dampfreformierung, insbesondere über die Partialdrücke des Kohlenwasserstoffs, des Wassers sowie der Prozesstemperatur eingestellt. Anschließend wird

d) die Brennstoffzelle im Leerlauf betrieben, also ohne eine externe Last. Somit fließt kein Strom zwischen Anode und Kathode über einen elektrischen Stromkreis. Im Leerlauf wird die Leerlaufspannung gemessen. Unter diesen Bedingungen stellt sich eine Leerlaufspannung von -715 mV bis - 830 mV ein.

Durch das erfindungsgemäße Verfahren wird gezielt ein Potential an der Anode eingestellt, sodass eine Oxidation von Schwefel zu Schwefeldioxid erfolgt, ohne dass gleichzeitig eine Oxidation des üblicherweise als Katalysator in Festoxidbrennstoffzellen eingesetzten Nickels erfolgt. Die erfindungsgemäße Verfahrensführung führt somit zu einer "selektiven Oxidation" des Schwefels unter Verschonung des Nickels im Katalysator. Somit kann die Brennstoffzelle einfach regeneriert werden, ohne dass andere Gase, insbesondere Luft oder Sauerstoff an die Anode geführt werden müssen. Des Weiteren wird im Vergleich zu der Verwendung der eingangs diskutierten Regenerationsverfahren eine Verlängerung der Lebensdauer der Festoxidbrennstoffzelle dadurch erreicht, dass eine Oxidation des Nickels verhindert wird. Zwar könnte entstehendes Nickeloxid durch den Wasserstoff wieder entfernt werden. Der Prozess der Oxidation und Reduktion ist jedoch mit sehr deutlichen Änderungen der Abstände zwischen den Nickelatomen verbunden, sodass diese Prozesse zu einer Degeneration der Anode führen und somit die Lebensdauer begrenzen würden.

Es versteht sich, dass angegebene Spannungen relative Messungen darstellen und daher die Vorzeichen der Spannungen sich aus der Richtung der Messung ergeben.

In einer weiteren Ausführungsform des Verfahrens wird als zusätzlicher Verfahrensschritt f) der Betrieb der Festoxidbrennstoffzelle unter Last mit einem Strom von 0,1 A bis zum maximalen Nennstrom durchgeführt. Der Strom wird hierbei nicht von außen auf die Brennstoffzelle aufgebracht, sondern von der Brennstoffzelle erzeugt und abgegeben. Der Nennstrom der Brennstoffzelle ist der der maximale Strom, auf welchen die Brennstoffzelle im Regelbetrieb ausgelegt ist. Vorzugsweise erfolgt der Betrieb der Festoxidbrennstoffzelle unter Last mit einem Strom von 0,1 A bis 20 A

In einer weiteren Ausführungsform des Verfahrens werden als zusätzlicher Verfahrensschritt g) Schwefelverbindungen im Anodenabgas detektiert. Bevorzugt erfolgt die Detektion von $SO_2$. Alternativ oder zusätzlich kann auch $SO_3$ detektiert werden.

In einer weiteren Ausführungsform des Verfahrens werden die Verfahrensschritte d) Betreiben der Festoxidbrennstoffzelle im Leerlauf und Messen der Leerlaufspannung sowie f) Betreiben der Festoxidbrennstoffzelle unter Last mit einem Strom von 0,1 A bis Nennstrom nacheinander wiederholt, bis sich eine Leerlaufspannung von - 715 mV bis - 830 mV einstellt.

In einer weiteren Ausführungsform des Verfahrens wird zusätzlich zwischen Verfahrensschritt b) und d) der Verfahrensschritt c) Unterbrechen der Zufuhr des Anodengases durchgeführt. Dieser Schritt c) wird bevorzugt ausgeführt, sofern die Leerlaufspannung einen Wert von unterhalb - 830 mV, d.h. ein zum Negativen verschobenes Potential, aufweist.

In einer weiteren Ausführungsform des Verfahrens wird zusätzlich zu den Verfahrensschritten a), b), c), d) und f) der Verfahrensschritt e) zwischen dem Verfahrensschritt d) und dem Verfahrensschritt f) durchgeführt, wobei der Verfahrensschritt e) sich aus dem Verfahrensschritt e1), e2) und e3) zusammensetzt.

In Verfahrensschritt e1) wird die Leerlaufspannung erfasst. In Verfahrensschritt e2) wird erneut kurzzeitig Anodengas zugeführt, sofern die in e1) erfasste Leerlaufspannung einen Wert von - 715 mV überschreitet. In Verfahrensschritt e3) erfolgt ein kurzzeitiges Betreiben der Festoxidbrennstoffzelle unter Last mit einem Strom von 0,1 A bis Nennstrom, sofern die in e1) erfasste Leerlaufspannung einen Wert von - 850 mV unterschreitet.

Kurzfristig im Sinne der Erfindung ist ein Zeitraum von 1 ms bis 10 min, vorzugsweise von 100 ms bis 1 min, besonders bevorzugt von 100 ms bis 10 s.

Vorzugsweise werden die Verfahrensschritte a) bis f) solange wiederholt, bis in Verfahrensschritt g) die Konzentration der Schwefelverbindungen im Anodenabgas einen vorgegebenen Grenzwert, insbesondere einen vorgegebenen Grenzwert von 50 ppm, bevorzugt von 5 ppm, besonders bevorzugt von 0,5 ppm, oder einen gesetzlich vorgeschriebenen Grenzwert unterschreitet.

In einer weiteren bevorzugten Ausführungsform wird die Temperatur der Festoxidbrennstoffzelle im Schritt a) auf 650 °C bis 950 °C eingestellt.

In einer weiteren bevorzugten Ausführungsform wird die Temperatur der Festoxidbrennstoffzelle im Schritt a) auf 650 °C bis 850 °C eingestellt.

In einer weiteren besonders bevorzugten Ausführungsform wird die Temperatur der Festoxidbrennstoffzelle im Schritt a) auf 775 °C bis 825 °C eingestellt

In einem weiteren Aspekt betrifft die Erfindung eine Steuereinrichtung zur Steuerung einer Festoxidbrennstoffzelle, wobei die Steuereinrichtung zur Durchführung eines erfindungsgemäßen Verfahrens ausgebildet ist.

In einem weiteren Aspekt betrifft die Erfindung ein Computerprogrammprodukt, insbesondere ein digitales Speichermedium, mit ausführbaren Programminstruktionen zur Durchführung eines erfindungsgemäßen Verfahrens.

Nachfolgend ist das erfindungsgemäße Verfahren anhand der Zeichnungen näher erläutert.

Figur 1: Reaktionsregime der Nickeloxid-, bzw. der Schwefeloxidbildung in Abhängigkeit der Temperatur und des Anodenpotentials gegenüber Luft
Figur 2: Blockdiagramm des Verfahrens

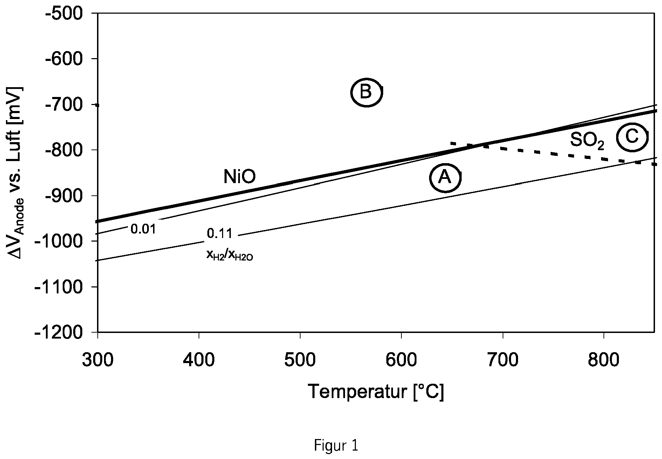

Figur 1 zeigt das Reaktionsregime der Nickeloxid-, bzw. der Schwefeloxidbildung in Abhängigkeit der Temperatur und des Anodenpotentials gegenüber Luft. Das Anodenpotential gegenüber Luft repräsentiert den Sauerstoffpartialdruck, der an der Anode vorliegt. Als messbare Größe entspricht der Betrag des Zellpotentials dem Anodenpotential, solange die Festoxidbrennstoffzelle im Leerlauf und mit Luft an der Kathode betrieben wird. Das Anodenpotential $\Delta V_{An/Air}$ lässt sich ebenfalls als Sauerstoffpartialdruck $p_{O_2,An/Air}$ darstellen, wobei ein von seinem Betrag her höheres Anodenpotential (in negative Richtung der $\gamma$-Achse) einem niedrigeren Sauerstoffpartialdruck entspricht.

$$p_{O_2,\,An/Air} = \frac{p_{O_2,\,Air}}{e^{\left(\frac{-\Delta V_{An/Air} \cdot 2 \cdot F}{T \cdot R_m}\right)^2}}$$

Die Linie NiO kennzeichnet den Grenzbereich des Nickeloxidationsregimes. Im Bereich B oberhalb der Linie NiO bildet sich Nickeloxid.

$$Ni + 1/2 O_2 \rightleftarrows NiO$$

Unterhalb der Linie NiO im Bereich A ist der Sauerstoffpartialdruck zu gering als dass Nickeloxid gebildet wird. Nickeloxid behindert die Oxidation des Wasserstoffs und zerstört die mechanische Stabilität der Anode. Der Betriebsbereich B ist daher prinzipiell durch Wahl des Brennstoffumsatzes bzw. entsprechenden Wasserstoffgehalts im Anodengas zu vermeiden. Eine weitere wünschenswerte Reaktion, die im Bereich B möglich ist, ist die Oxidation des an den Nickel gebundenen Schwefels zu Schwefeldioxid.

$$NiS + O_2 \rightleftarrows Ni + SO_2$$

Es hat sich nun gezeigt, dass außer im Bereich B ebenfalls im Bereich C die erwünschte Reaktion der Schwefeloxidation erfolgt, jedoch ohne eine die Lebensdauer der Festoxidbrennstoffzelle verkürzende Oxidation des Nickels zu haben.

Das erfindungsgemäße Verfahren dieser Erfindung betreibt daher die Festoxidbrennstoffzelle in einem Parameterbereich, welcher im Bereich C zu finden ist. In diesem Bereich lässt sich die notwendige Selektivität der Schwefeloxidation erreichen. Dieser Bereich befindet sich oberhalb von 600 °C und Sauerstoffpartialdrücken zwischen $10^{-14}$ bar und $10^{-16}$ bar, bzw. Anodenpotentialen zwischen - 715 mV und - 830 mV gegenüber Luft.

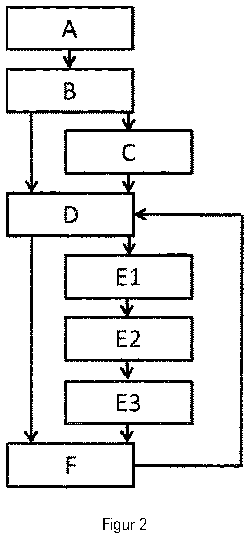

In Figur 2 ist eine besonders bevorzugte Ausführungsform des erfindungsgemäßen Verfahrens als Blockdiagramm dargestellt.

In Schritt A wird die Betriebstemperatur der Festoxidbrennstoffzelle auf eine Temperatur zwischen 600 °C und 950 °C, bevorzugt auf 650 °C bis 850 °C, besonders bevorzugt auf 775 °C bis 825 °C eingestellt. In Schritt B wird der molare Wasserstoffanteil des Synthesegases auf mindestens 1 % und höchstens 10 % eingestellt. In dem optionalen Schritt C wird die Zufuhr des Anodengases unterbrochen. In Schritt D wird die Festoxidbrennstoffzelle im Leerlauf betrieben und die Leerlaufspannung gemessen. In Schritt E1 wird die Leerlaufspannung erfasst. Liegt die Leerlaufspannung über - 715 mV, so wird in Schritt E2 kurzzeitig Anodengas zugeführt. Liegt die Leerlaufspannung bei - 850 mV oder niedriger, so wird Schritt E3 die Festoxidbrennstoffzelle unter Last mit einem Strom von 0,1 A bis Nennstrom betrieben. Anschließend erfolgt in Schritt F der Betrieb der Festoxidbrennstoffzelle unter Last mit einem Strom von 0,1 A bis Nennstrom. Von Schritt F wird zurück in Schritt D gegangen, um in Schritt E1 zu prüfen, ob sich eine Leerlaufspannung - 715 mV bis - 850 mV eingestellt hat.

Sollte das Verfahren derart durchgeführt werden, dass nach Schritt A und Schritt B direkt Schritt D folgt und sich als Leerlaufspannung eine niedrigere Spannung als bis - 830 mV einstellen, so ergibt sich, dass unter Auslassung des Schritts E1 unmittelbar in Schritt E2 die Zufuhr des Anodengases unterbrochen wird.

**Patentansprüche**

1. Verfahren zur Regeneration einer Festoxidbrennstoffzelle, wobei als Anodengas ein Synthesegas aus einer Dampfreformierung eingesetzt wird, folgende Schritte aufweisend:

   a) Einstellen der Betriebstemperatur der Festoxidbrennstoffzelle auf eine Temperatur zwischen 600 °C und 1.200 °C,
   b) Einstellen des molaren Wasserstoffanteils des Synthesegases auf mindestens 1 % und höchstens 10%,
   d) Betrieb der Festoxidbrennstoffzelle im Leerlauf und Messen der Leerlaufspannung, wobei sich eine Leerlaufspannung von - 715 mV bis - 830 mV einstellt.

2. Verfahren nach Anspruch 1 , **dadurch gekennzeichnet, dass** zusätzlich Verfahrensschritt f) durchgeführt wird, wobei Verfahrensschritt f) Betrieb der Festoxidbrennstoffzelle unter Last mit einem Strom von 0,1 A bis zum maximalen Nennstrom ist.

3. Verfahren nach einem der vorangegangenen Ansprüche, **dadurch gekennzeichnet, dass** zusätzlich Verfahrensschritt g) durchgeführt wird, wobei Verfahrensschritt g) Detektion des Anodenabgases auf Schwefelverbindungen ist.

4. Verfahren nach einem der vorangegangenen Ansprüche, **dadurch gekennzeichnet, dass** die Schritte d) und f) nacheinander wiederholt werden, bis sich eine Leerlaufspannung von - 715 mV bis - 830 mV einstellt.

5. Verfahren nach einem der vorangegangenen Ansprüche, **dadurch gekennzeichnet, dass** zusätzlich zwischen Verfahrensschritt b) und d) der Verfahrensschritt

   c) Unterbrechen der Zufuhr des Anodengases durchgeführt wird.

6. Verfahren nach Anspruch 5, **dadurch gekennzeichnet, dass** nach dem Verfahrensschritt d) der Verfahrensschritt e) erfolgt, wobei der Verfahrensschritt e) sich aus den Verfahrensschritten e1), e2) und e3) zusammensetzt, wobei

   e1) Erfassen der Leerlaufspannung,
   e2) Erneutes kurzzeitiges Zuführen von Anodengas, sofern die in e1) erfasste Leerlaufspannung einen Wert von - 715 mV überschreitet,
   e3) kurzzeitiges Betreiben der Festoxidbrennstoffzelle unter Last mit einem Strom von 0,1 A bis Nennstrom, sofern die in e1) erfasste Leerlaufspannung einen Wert von - 850 mV unterschreitet.

7. Verfahren nach einem oder mehreren der vorangegangenen Ansprüche 3 bis 6, **dadurch gekennzeichnet, dass** die Verfahrensschritte a) bis f) solange wiederholt werden, bis in Verfahrensschritt g) die Konzentration der Schwefelverbindungen im Anodenabgas einen vorgegebenen Grenzwert unterschreitet.

8. Verfahren nach einem der vorangegangenen Ansprüche, **dadurch gekennzeichnet, dass** die Temperatur der Festoxidbrennstoffzelle im Schritt a) auf 650 °C bis 950 °C eingestellt wird.

9. Verfahren nach einem der vorangegangenen Ansprüche, **dadurch gekennzeichnet, dass** die Temperatur der Festoxidbrennstoffzelle im Schritt a) auf 650 °C bis 850 °C eingestellt wird.

10. Verfahren nach einem der vorangegangenen Ansprüche, **dadurch gekennzeichnet, dass** die Temperatur der Festoxidbrennstoffzelle im Schritt a) auf 775 °C bis 825 °C eingestellt wird.

11. Steuereinrichtung zur Steuerung einer Festoxidbrennstoffzelle, wobei die Steuereinrichtung zur Durchführung eines Verfahrens gemäß einem der Ansprüche 1 bis 10 ausgebildet ist.

12. Computerprogrammprodukt, insbesondere digitales Speichermedium, mit ausführbaren Programminstruktionen zur Durchführung eines Verfahrens gemäß einem der Ansprüche 1 bis 10.

**Claims**

1. Method for regenerating a solid oxide fuel cell, **characterized in that** a syngas obtained from a steam reforming process is used as the anode gas, comprising the following steps:

   a) setting the operating temperature of the solid oxide fuel cell to 600°C to 1,200°C,
   b) setting the molar hydrogen content of the syngas to at least 1% and a maximum of 10%, and
   d) operating the solid oxide fuel cell in idling mode and measuring the idling voltage, wherein an idling voltage of -715 mV to -830 mV is established.

2. Method according to Claim 1, **characterized in that** process step f) is additionally carried out, wherein process step f) is operating the solid oxide fuel cell under load with a current of 0.1 A to maximum rated current.

3. Method according to one of the preceding claims, **characterized in that** process step g) is additionally carried out, wherein process step g) is
   detection of sulfur compounds in the anode exhaust gas.

4. Method according to one of the preceding claims, **characterized in that** steps d) and f) are repeated in succession until an idling voltage of -715 mV to -830 mV is established.

5. Method according to one of the preceding claims, **characterized in that** between process step b) and d), the process step of c) interrupting the supply of the anode gas is additionally carried out.

6. Method according to Claim 5, **characterized in that** after process step d), process step e) takes place, wherein process step e) comprises process steps e1), e2), and e3), wherein e1) is determining the idling voltage, e2) is again briefly supplying the anode gas if the idling voltage determined in e1) exceeds a value of -715 mV, and e3) is briefly operating the solid oxide fuel cell under load with a current of 0.1 A to rated current if the idling voltage determined in e1) drops below a value of -850 mV.

7. Method according to one or more of preceding Claims 3 through 6, **characterized in that** process steps a) through f) are repeated until, in process step g), the concentration of the sulfur compounds in the anode exhaust gas drops below a predetermined limit value.

8. Method according to one of the preceding claims, **characterized in that** the temperature of the solid oxide fuel cell in step a) is set to 650°C to 950°C.

9. Method according to one of the preceding claims, **characterized in that** the temperature of the solid oxide fuel cell in step a) is set to 650°C to 850°C.

10. Method according to one of the preceding claims, **characterized in that** the temperature of the solid oxide fuel cell in step a) is set to 775°C to 825°C.

11. Control device for controlling a solid oxide fuel cell, wherein the control device is configured to carry out a method according to one of Claims 1 through 10.

12. Computer program product, in particular digital storage medium, with executable program instructions for carrying out a method according to one of Claims 1 through 10.

**Revendications**

1. Procédé de régénération d'une pile à combustible à oxyde solide, dans lequel on utilise comme gaz anodique un gaz de synthèse provenant d'un reformage à la vapeur, présentant les étapes suivantes:

   a) régler la température de fonctionnement de la pile à combustible à oxyde solide à une température comprise entre 600°C et 1200°C,
   b) régler la proportion molaire d'hydrogène du gaz de synthèse à au moins 1 % et au plus 10 %,
   d) faire fonctionner la pile à combustible à oxyde solide à vide et mesurer la tension à vide,

dans lequel il s'établit une tension à vide de -715 mV à -830 mV.

2. Procédé selon la revendication 1, **caractérisé en ce que** l'on exécute en outre une étape f), dans lequel l'étape f) est un fonctionnement de la pile à combustible à oxyde solide sous charge avec un courant de 0,1 A jusqu'au courant nominal maximal.

3. Procédé selon l'une quelconque des revendications précédentes, **caractérisé en ce que** l'on exécute en outre une étape g), dans lequel l'étape g) est une détection du gaz d'échappement anodique portant sur les composés de soufre.

4. Procédé selon l'une quelconque des revendications précédentes, **caractérisé en ce que** l'on répète les étapes d) et f) l'une après l'autre, jusqu'à ce qu'il s'établisse une tension à vide de -715 mV à -830 mV.

5. Procédé selon l'une quelconque des revendications précédentes, **caractérisé en ce que** l'on exécute en plus entre les étapes b) et d) une étape c) d'interruption de la fourniture du gaz anodique.

6. Procédé selon la revendication 5, **caractérisé en ce que** l'on exécute l'étape e) après l'étape d), dans lequel l'étape e) se compose des étapes e1), e2) et e3), dans lequel

   e1) détecter la tension à vide,
   e2) fournir de nouveau brièvement du gaz anodique, dans la mesure où la tension à vide détectée à l'étape e1) dépasse une valeur de -715 mV,
   e3) faire fonctionner brièvement la pile à combustible à oxyde solide sous charge avec un courant de 0,1 A au courant nominal, dans la mesure où la tension à vide détectée à l'étape e1) descend sous une valeur de -850 mV.

7. Procédé selon une ou plusieurs des revendications 3 à 6, **caractérisé en ce que** l'on répète les étapes a) à f) jusqu'à ce qu'à l'étape g) la concentration des composés de soufre dans le gaz d'échappement anodique descende en dessous d'une valeur limite prédéterminée.

8. Procédé selon l'une quelconque des revendications précédentes, **caractérisé en ce que** l'on règle la température de la pile à combustible à oxyde solide à l'étape a) de 650°C à 950°C.

9. Procédé selon l'une quelconque des revendications précédentes, **caractérisé en ce que** l'on règle la température de la pile à combustible à oxyde solide à l'étape a) de 650°C à 850°C.

10. Procédé selon l'une quelconque des revendications précédentes, **caractérisé en ce que** l'on règle la température de la pile à combustible à oxyde solide à l'étape a) de 775°C à 825°C.

11. Dispositif de commande pour commander une pile à combustible à oxyde solide, dans lequel le dispositif de commande est conçu pour exécuter un procédé selon l'une quelconque des revendications 1 à 10.

12. Produit de programme informatique, en particulier support de mémoire numérique, avec des instructions de programme exécutables pour la mise en oeuvre d'un procédé selon l'une quelconque des revendications 1 à 10.

Figur 1

Figur 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20140170517 A1
- DE 11205002675 T5
- DE 102012103189 A1
- DE 102012221461 A1
- WO 2015014415 A1
- US 2011189582 A1